Europäisches Patentamt

European Patent Office

Office européen des brevets

(19)

(11) Publication number: **0 191 005**
**A1**

(12) **EUROPEAN PATENT APPLICATION**

(21) Application number: 86850019.0

(22) Date of filing: 24.01.86

(51) Int. Cl.⁴: **H 02 P 7/62**
**H 02 P 5/40, G 05 D 3/12**

(30) Priority: 28.01.85 SE 8500382

(43) Date of publication of application:
13.08.86 Bulletin 86/33

(84) Designated Contracting States:
AT CH DE FR GB IT LI SE

(71) Applicant: GME-SYSTEM AB
Mediavägen 3
S-135 48 Tyresö(SE)

(72) Inventor: Vikarby, Bo Erik
Vretenvägen
S-13900 Värmdö(SE)

(74) Representative: Onn, Thorsten et al,
AB STOCKHOLMS PATENTBYRA Box 3129
S-103 62 Stockholm(SE)

(54) A device for generation of nominal current values in servo drive systems for brushless permanently magnetized synchronous motors.

(57) A circuit device for generating nominal current values in a servo drive system of a brushless permanently magnetized three-phase synchronous motor for regulating the speed or position of the motor (M). The motor has a position indicator (L) providing a three-phase output signal $(I_A, I_B, I_C)$ via its outputs. Multiplier circuits (M1, M2, M3) are each connected to the outputs of the position indicator (L) with one of their inputs. A predetermined nominal current value (Iv) is fed to the second of the inputs of the multiplier circuits and the desired nominal current values are obtained via the outputs of the multiplier circuits.

FIG.1

Croydon Printing Company Ltd.

# A device for generation of nominal current values in servo drive systems for brushless permanently magnetized synchronous motors

## Technical field

This invention relates to a device at brushless permanently magnetized synchronous motors according to the preamble of claim 1. The device is to provide a servo drive system known per se of the motor with nominal current values. Brushless motors here intended are i.a. utilized for robots and other machines for the industry.

## State of art

A problem with brushless motors of the kind intended here is to create correct nominal current values of the current regulator of the motor. In e.g. a three-phase motor with speed control, the three field windings which are reciprocally dephased $120^{\circ}$ in order to obtain the necessary flow adaptation, are to be fed with currents from the regulator. It is previously known to arrange a position indicator (e.g. a resolver) on the motor shaft. The analog output signals of the position indicator are thereafter converted into the corresponding digital values by means of a converter and these are supplied to a three-phase torque angle generator which emits signals corresponding to the torque angle $\phi$ of the different phases. By modulating these signals by a nominal value of the current from a superordinated regulation system the desired nominal current values of the current regulators of the motor can be obtained. The units in the feed-back loop thus formed from position indicator to regulator will as a rule be relatively complicated due to the included units.

## Summary of the invention

It is the object of the present invention to provide a simplified circuit device in the feed-back loop between the position indicator of the brushless motor or the motor shaft and its current regulator.

The device is characterized as is apparent from the characterizing portion of claim 1.

## Brief description of drawings

The invention will be described more in detail with reference to the accompanying drawing, wherein

Fig. 1 shows a simplified block diagram of the circuit device according to the invention as well as motor and associated current regulator,

Fig. 2 shows a block diagram of an alternative embodiment of the circuit device according to the invention,

Fig. 3 shows more closely the appearance of a position indicator included in the diagram according to Fig. 1, and

Fig. 4 shows a circuit diagram of the electronic circuits of the position indicator.

Embodiments

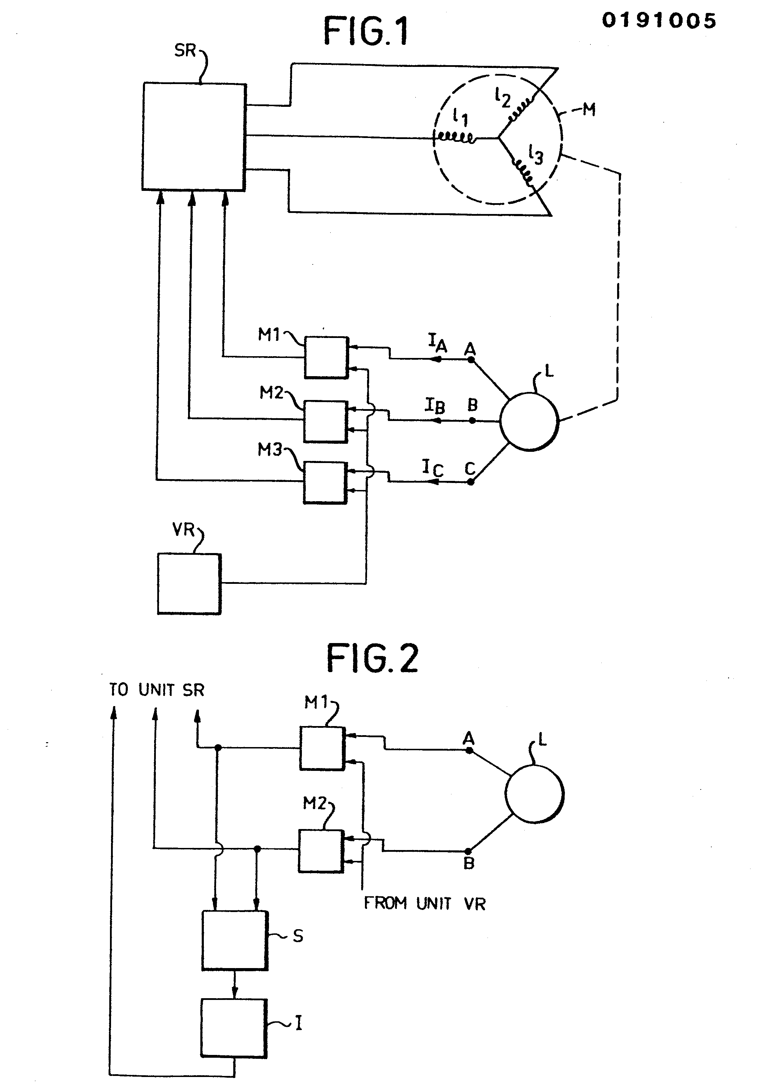

In Fig. 1, a three-phase brushless permanently magnetized synchronous motor M with its three field windings $l_1$, $l_2$, $l_3$ is shown as an example. A current regulator SR of a design known per se is connected with its outputs to the field windings $l_1$ - $l_3$ of the motor in order to supply a regulated current to these. In this way the intended flow distribution in the air gap of the motor is achieved, whereby the desired torque is obtained at the regulation and upon variation of the motor load. A position indicator L is connected to the shaft of the motor (indicated by the dashed line) in order to sense the position of the motor shaft. The position indicator L can preferably be mounted on the motor shaft, i.e. mechanically connected to this, but another form of coupling is also possible (e.g. an inductive one). In the case described here with three-phase windings the position indicator L will emit three output quantities, the currents $I_A$, $I_B$ and $I_C$ mutually having the same phase position (= $120^O$) as the motor windings $l_1$, $l_2$, $l_3$, i.e. if $I_A$ has the phase position $0^O$ $I_B$ has the phase position $120^O$ and $I_C$ the phase position $240^O$. Moreover, the number of poles should be the same in the position indicator as in the motor. The number of poles of the motor can be 2, 4, 6 or 8. The motor can also be a 2-phase or 4-phase one.

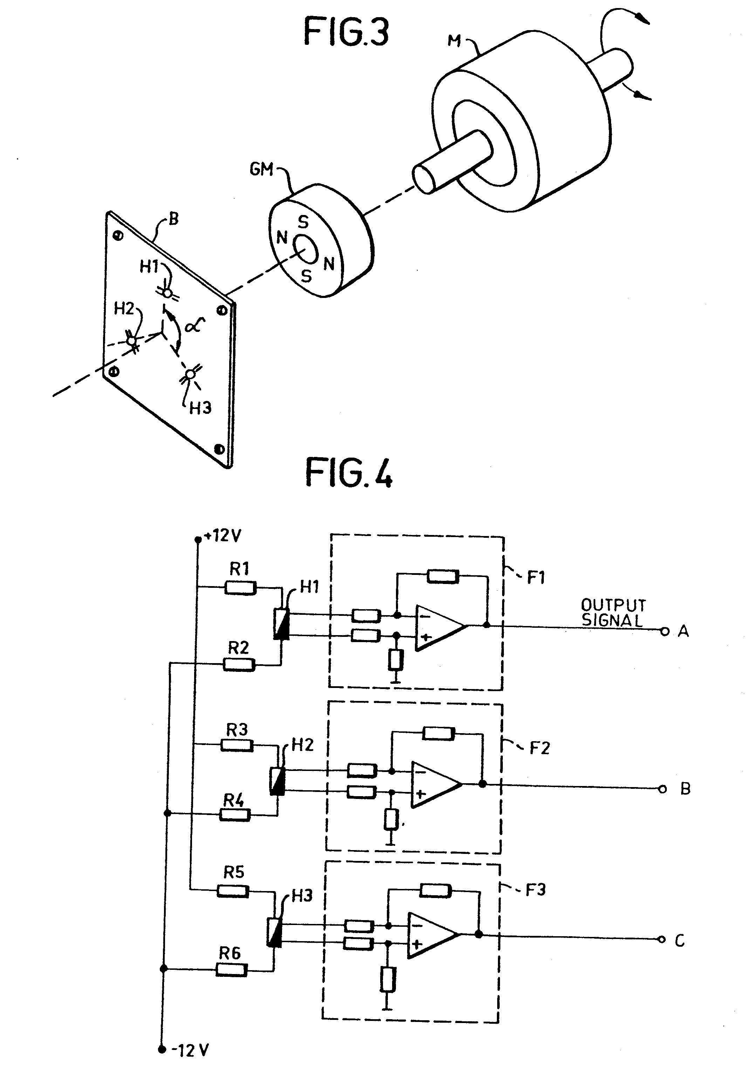

The position indicator L, which is described more in detail in connection with Fig. 3 is connected with its three outputs to one input of each three multiplier circuits M1, M2 and M3. A speed regulation device VR of a type known per se is connected to the other input of each of these circuits. The regulator VR emits a current quantity $I_v$ which is multiplied in the multipliers analogously with the relative

output quantity $I_A$, $I_B$ and $I_C$ from the position indicator. The current quantity $I_v$ is a nominal current value of the current of the motor. The regulator VR can also consist of a position regulator. The three outputs of the multiplier circuits are connected to the nominal value inputs of the current regulator of the motor.

The current values $I_A$, $I_B$, $I_C$ of the three-phase motor received from the position indicator L with a mutual phase shift of 120 electric degrees are thus multiplied in three analog multiplier circuits M1-M3 by the nominal current value $I_v$ emitted from the speed regulation device VR. After this multiplication, three signals are obtained which are dephased $120^O$ and are nominal current values. These values are fed to three current control circuits included in the current regulator SR and fed back by the nominal current values to the field windings $l_1$-$l_3$ of the motor in conventional manner. The motor M will then receive field currents, in this case three different ones, the amplitudes and relative phase positions of which each are the product of the signals from the position indicator of the motor and the nominal current value generated by the speed regulation device.

The system shown in Fig. 1 can be used both for 1- and 4-quadrant operation of the motor M.

Another somewhat simplified embodiment of the circuit device according to Fig. 1 is shown in the block diagram according to Fig. 2. The third sensing member of the position indicator has been omitted here and only the two output quantities $I_A$ and $I_B$ are utilized. As a result of this only two multipliers M1 and M2 are required. The nominal current value from the third multiplier M3 according to Fig. 1 can instead be formed by connecting a summation circuit S to the outputs of the two multipliers M1 and M2 and, moreover, an inverting circuit I is connected to the output of the summation circuit S as the third nominal current value derived from the output C of the position indicator L can be written as:

$$I_C = \frac{K}{I_A + I_B} \text{ , where K = const. } I_v \text{ and}$$

when $I_A$ and $I_B$ reciprocally have a phase difference of $120^O$.

4

Thus, the third nominal current value can be obtained via the output of the inverter by means of the summation circuit S shown in Fig. 2 and the inverter I.

Of course it is also possible to connect the summation circuit S and the inverter I directly to the two outputs A and B and the output of the inverter to the multiplier M3 which is thus maintained.

An embodiment of the position indicator L will be described in greater detail with reference to Fig. 3. The perspective view according to Fig. 3 shows the motor M, the permanent magnet GM of the position indicator and a fixedly secured plate or washer B carrying the sensing members of the position indicator. The motor M is a brushless three-phase synchronous motor having the same number of poles as the sensor magnet GM. The direction of the motor shaft through the sensor magnet GM and the plate B is indicated by the dashed line. In this case the sensing members of the plate B comprise three Hall elements $H_1$, $H_2$, $H_3$ mounted on the plate so that the angle $\alpha = 120^\circ$. The mounting distance between plate and magnet is about 0.5 mm. For the sake of simplicity the electric connections to the Hall elements have been omitted in Fig. 3.

The Hall element $H_2$ can e.g. be omitted for the embodiment according to Fig. 2 with only two outputs A and B which emit output signals $I_A$, $I_B$ mutually dephased $120^\circ$. The angle $\alpha$ between the lines of sight of the Hall elements $H_1$ and $U_3$ is still $= 120^\circ$. The Hall element $H_2$ as well as its associated circuits (F2 and resistors) will then of course be omitted in the circuit according to Fig. 4.

Fig. 4 shows how the Hall elements H1-H3 are connected electrically. Each Hall element is included in a voltage divider between +12V and -12V supply voltage. Resistors R1-R6 are connected in the voltage divider, whereby the respective Hall element is given proper bias. The outputs of the Hall elements H1-H3 are each connected to an operational amplifier connection F1, F2, F3 of a known design. Three sinusoidal quantities which are mutually dephased 120 electric degrees are obtained via each output A, B and C.

The position indicator need not necessarily be designed (Figs. 3 and 4) to give sinusoidal output signals.

It is also possible to use position indicators providing trapezoidal output signals in the device according to the invention.

Also other sensing elements than Hall elements are possible in the position indicator L, e.g. other magnetic or photoelectric elements giving an n-phase signal (n = 2,3,4) which is sinusoidal or trapezoidal.

----------------

6

<u>CLAIMS</u>

1. A device for generating nominal current values in a servo drive system of a brushless, permantently magnetized n-phase synchronous motor (n = 2, 3 or 4) (M) of a current regulator (SR) feeding the field windings in the motor (M) with field currents in dependence on said nominal current values, especially for speed or position regulation, a position indicator (L) being connected to the shaft of the motor, c h a r a c t e r i z e d  in that the position indicator (L) is arranged to emit via its outputs an analogous n-phase output signal ($I_A$, $I_B$, $I_C$) having the same number of poles and reciprocal phase position as the motor and that n multiplier circuits (M1, M2, M3) are each connected to the outputs of the position indicator (L) for multiplying said n-phase output signal by a predetermined nominal current value ($I_v$) and generating said nominal current values, alternatively, for n = 3 the position indicator is arranged to emit via two of its 3-phase outputs output quantities ($I_A$, $I_B$) reciprocally dephased $120^O$, that two (M1, M2) of said multiplier circuits (M1-M3) are arranged to multiply said output quantities ($I_A$, $I_B$) by a predetermined current value ($I_v$) in order to generate two of said nominal current values, and that means (S, I) are provided to form from said two nominal current values the third of said nominal current values, alternatively, that said means (S, I) are connected to said two outputs of the position indicator (L) and to the input of one of said three multiplier circuits (M1, M2, M3).

2. The device of claim 1, c h a r a c t e r i z e d in that said means consists of a summation circuit (S) having its two inputs connected to each output of said two multiplier circuits, and in an inverting circuit (I) connected to the output of the summation circuit in order to provide said third nominal current value via its output.

3. The device of claims 1-2, c h a r a c t e - r i z e d  in that the position indicator (L) is arranged to emit an output signal consisting of n sinusoidal output quantities ($I_A$, $I_B$, $I_C$) with reciprocally the same phase position as the field quantities of the motor.

4. The device of claims 1-2, c h a r a c t e -

r i z e d   in that the position indicator (L) is arranged to emit an output signal consisting of n trapezoidal output quantities having reciprocally the same phase position as the field quantities of the motor.

----------------

# FIG.1

0191005

# FIG.2

TO UNIT SR

FROM UNIT VR

# FIG.3

M

GM

B

H1

H2

α

H3

S

N

N

S

# FIG.4

+12V

R1    H1                              F1

R2                              OUTPUT
                                SIGNAL        A

R3    H2                              F2

R4                                            B

R5    H3                              F3

R6                                            C

-12 V

European Patent Office

**EUROPEAN SEARCH REPORT**

Application number

EP  86 85 0019

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 915 987  (R. BOSCH GMBH) <br> * page 7, line 13 - page 13, line 9; figures 1, 2 * | 1,3,4 | H 02 P    7/62 <br> H 02 P    5/40 <br> G 05 D    3/12 |
| | --- | | |
| A | EP-A-0 065 614  (R. BOSCH GMBH) <br> *  page 2, line 26 - page 6, line 38; figures 1-4 * | 1 | |
| | --- | | |
| A | DE-A-3 151 257  (LICENTIA PATENT-VERWALTUNGS GMBH) <br> * page 1, claims 1-5; figure 1 * | 1 | |
| | ----- | | |

TECHNICAL FIELDS SEARCHED (Int. Cl.4)

H 02 P    7/00 <br> H 02 P    5/00 <br> G 05 D    3/00

The present search report has been drawn up for all claims

| Place of search | Date of completion of the search | Examiner |
|---|---|---|
| BERLIN | 30-04-1986 | WEIHS J.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82